# EUROPÄISCHE PATENTSCHRIFT

(11) **EP 0 776 564 B1**
(45) Veröffentlichungstag und Bekanntmachung des Hinweises auf die Patenterteilung: **09.05.2001**
(21) Anmeldenummer: 95931180.4
(22) Anmeldetag: 22.08.1995
(51) Int. Cl.: H04M 1/66

(54) **CHIPKARTENHALTER FÜR MOBILTELEFON**
CHIP CARD HOLDER FOR MOBILE TELEPHONE
SUPPORT DE CARTE A PUCE POUR TELEPHONE MOBILE

(30) Priorität: 27.08.1994 DE 4430531
(43) Veröffentlichungstag der Anmeldung: 04.06.1997
(73) Patentinhaber: GRUNDIG Aktiengesellschaft, 90471 Nürnberg (DE)
(72) Erfinder: RITTER, Kai-Uwe, D-91154 Roth (DE)
(86) Internationale Anmeldenummer: EP9503329
(87) Internationale Veröffentlichungsnummer: WO9607264

(56) Entgegenhaltungen:
- EP-A- 0 475 210
- EP-A- 0 494 503
- EP-A- 0 505 931
- DE-A- 3 624 716
- DE-A- 3 822 848
- DE-A- 4 138 342
- DE-A- 4 317 385
- DE-U- 9 308 399

## Beschreibung

Die Erfindung betrifft einen Chipkartenhalter zum Einlegen und Befestigen einer SIM-Karte nach dem Oberbegriff des Anspruchs 1.

Zum Betrieb eines D-Netz Funktelefons ist eine Berechtigungskarte notwendig, die eine Identifizierung des Teilnehmers ermöglicht. Wegen der geringen Größe der Telefonapparate wird dazu meist eine Minichip -Karte, die sogenannte SIM-Karte (Subscriber ldentification Module) mit den Abmessungen von ca. 15 × 25 mm verwendet. Diese SIM-Karte hat gegenüber der normalen Chipkarte mit den Abmessungen von ca. 55 × 85 mm den Nachteil einer schlechteren Handhabbarkeit. Sie kann außerdem leichter verloren werden.

Die Erfindung bezieht sich insbesondere auf die Verwendung einer SIM-Karte in einem Funktelefon, das sich in einem Autoradio-Gerät befindet. Geht man von einem kompakten Auto-Kombigerät aus, so weist der Betrieb des integrierten Funktelefons einige Nachteile auf. In der Frontseite des Gerätes muß ein Einführungsschlitz zum Einschieben der Chipkarte vorhanden sein. Dadurch wird zum einen die Optik der Frontblende gestört und zum anderen wird ein erheblicher Raum innerhalb des Gerätes für einen Kartenleser benötigt. Die Chipkarte ragt während des Betriebs aus dem Gerät heraus, wodurch die Gefahr einer Verletzung gegeben ist. Es besteht außerdem die Gefahr, falls das Gerät übermäßigen Vibrationen oder schockartigen Stößen ausgesetzt ist, daß die Karte losgerüttelt wird und sich lösen kann. Nachdem die Karte aus dem Gerät entnommen worden ist, muß sie in einem Etui aufbewahrt werden, um sie gegen mechanische Beschädigung und gegen Umwelteinflüsse zu schützen. Wegen dieser Nachteile ist ein Auto-Kombigerät mit Einführungsschlitz nicht empfehlenswert. Es muß nach einer besseren, einfacheren und preiswerteren (teurer Kartenleser) Lösung gesucht werden.

Ein kombiniertes Autoradio-Mobiltelefon ist z.B. aus der DE-A-4 317 385 bekannt, wobei in einer abnehmbaren Frontplatte des Autoradios ein Mobiltelefon integriest ist. Das deutsche Gebranchsmuster G 93 08 399.8 offenbart ein Mobiltelefon mit einer Halterung fur eine SIM-Karte; die Halterung ist im Mobiltelefon zwischen Gerateruckwand und Akku-Pack angeordnet.

Aufgabe der Erfindung ist es, in ein Mobiltelefon oder in ein kombiniertes Autoradio-Mobiltelefon einen Chipkartenhalter zu integrieren, der von außen das Kombigerät nicht als solches erkennen läßt (Einführungsschlitz), preiswert herstellbar ist (kein zusätzlicher Kartenleser) und die Handhabung der SIM-Karte erleichtert.

Diese Aufgabe wird durch die Merkmale des kennzeichnenden Teils des Anspruchs 1 gelöst. In den Unteransprüchen sind zweckmäßige Ausgestaltungen der Erfindung aufgezeigt.

Anspruch 2 gibt an, daß die in das abnehmbare Bedienteil eingelegte Chipkarte mit diesem elektrisch kontaktiert ist. Die Kontaktverbindung zwischen Chipkarte und Hauptgerät erfolgt über die elektrische Trennstelle von Bedienteil zu Hauptgerät. Eine andere Lösung zeigt Anspruch 3 auf. Auch in diesem Fall ist die Chipkarte im Bedienteil befestigt. Die Kontaktstellen der Chipkarte sind dem Hauptteil zugekehrt, so daß sie vom Hauptteil aus direkt elektrisch kontaktiert werden können. Der Vorteil ist der, daß auf der Bedienteilseite weniger Kontaktverbindungen notwendig sind. Nach Anspruch 4 ist in das abnehmbare Bedienteil ein Mikroprozessor integriert. Ein wesentlicher Teil des Funktelefons ist also aus dem Hauptgerät in das Bedienteil übernommen, wodurch das Funktelefon bei abgenommenem Bedienteil absolut funktionsunfähig wird.

Es ist seit langem bekannt, Autoradios in zweigeteilter Ausführung einzusetzen. Das Autoradio besteht dabei aus einem fest im Kraftfahrzeug montierten Hauptteil und einem abnehmbaren Bedienteil. Ein solches Autoradio ist beispielsweise aus DE-C3-3624716 bekannt. Das abnehmbare Bedienteil dient bei diesem Gerät dem Diebstahlschutz. Das Bedienteil ist über mechanische und elektrische Trennstellen mit dem Hauptteil verbunden. Nach Abnahme des Bedienteils ist das Autoradio nicht mehr funktionsfähig, es ist also für einen Dieb wertlos. Ein diesbezügliches Autoradio bildet eine gute Voraussetzung zur Schaffung eines Kombigerätes aus Autoradio und Funktelefon. Ein solches gattungsgemäßes Kombigerät ist bereits bekannt. In der DE-A1-4317385 ist eine Auto-Stereoanlage mit abnehmbarer Frontplatte offenbart. In diese abnehmbare Frontplatte ist ein zellulares Telefon integriert. Die Frontplatte enthält alle Teile, die für ein Funktelefon notwendig sind, einschließlich Spannungsversorgung und Antenne. Diese Lösung bietet dem Benutzer zweifelsohne einen Vorteil, denn er ist zum Telefonieren fahrzeugungebunden. Andererseits weist eine solche Lösung auch einige Nachteile auf. Die abnehmbare Frontplatte wird durch das integrierte Funktelefon größer und unhandlicher. Deshalb wird der Benutzer leicht dazu verleitet, die Frontplatte nur in besonderen Fällen vom Gerätehauptteil abzunehmen und somit den Vorteil einer Diebstahlschutzeinrichtung nicht zu nutzen. Zum anderen wird der Gesamtaufwand für das Kombigerät größer als unbedingt notwendig wäre, weil viele Bauteile sowohl im Hauptgerät, als auch in der Frontplatte vorhanden sein müssen.

Die erfindungsgemäße Lösung sieht im Gegensatz dazu hauptsächlich vor, in das abnehmbare Bedienteil nur eine Halterung für die SIM- Karte einzubauen, wobei selbstverständlich auch eine Lösung mit der Halterung im Hauptgerät möglich ist. Halterungen für die SIM-Karte sind bereits bekannt und werden in verschiedenen Ausführungen bei Funktelefonen, vorzugsweise bei Handfunkgeräten verwendet Zu nennen wäre beispielsweise das Gebrauchmuster G 93 08 399.8 in dem eine Halterung für eine SIM-Karte zwischen dem Gehäuse des Funktelefons und dem Akku-Pack beschrieben wird. Weitere Beispiele sind aus den Dokumenten EP-A2-0475210 und DE-A1-4138342 bekannt. Im ersteren wird die SIM-Karte in einen Adapter eingelegt, der die Größe einer normalen Chipkarte hat, um somit in einem Kartenlesegerät für normale Chipkarten eingesetzt werden zu können. Das zweite Dokument beschreibt eine Chipkarten-Halterung für die SIM-Karte in einem SIM-Chipkartenleser. Da es noch weitere Lösungsmöglichkeiten zum Befestigen einer SIM-Karte gibt, ist es in diesem Zusammenhang nicht erforderlich, auf Einzelheiten eines Kartenhalters einzugehen.

Die erfindungsgemäße Anordnung des Chipkarten-Halters im abnehmbaren Bedienteil bzw. im Hauptgerät und vom aufgesetzten Bedienteil abgedeckt, bietet einige Vorteile gegenüber dem Stand der Technik. Es wird an der Frontseite des Kombigerätes kein zusätzlicher Platz, beispielsweise für einen Einführungschlitz, benötigt. Die Chipkarte ist am kompletten Gerät nicht von außen sichtbar. Beim in dem abnehmbaren Bedienteil angeordneten Kartenhalter ist die SIM-Karte bei abgenommenem Bedienteil vor Diebstahl geschützt. Zum Aufbewahren der SIM-Karte ist kein Etui erforderlich; sie ist auch so gegen mechanische Beschädigungen geschützt. Das Einlegen der Karte erfolgt nur dann, wenn ein anderer als der Berechtigte das Fahrzeug benutzt. Da kein Einführungsschlitz vorhanden ist, besteht auch keine Gefahr der Verletzung durch die herausragende Karte. Bereits im normalen Autoradio vorhandene Bauteile können, wenn erforderlich, auch für das Funktelefon benutzt werden, wodurch kein überflüssiger Mehraufwand nötig ist.

Wie auch in den Ansprüchen aufgeführt ist, sind mehrere Ausführungen der Erfindung möglich. Der Chipkarten-Halter kann in das abnehmbare Bedienteil integriert sein, wodurch ein absoluter Schutz gegen Diebstahl und unbefugte Benutzung gegeben ist. Er kann jedoch auch Bestandteil des Hauptteils sein, wodurch das Bedienteil in Bezug auf Größe und Handlichkeit optimal gestaltet werden kann.

## Patentansprüche

1. Chipkartenhalter zum Einlegen und Befestigen einer SIM-Karte in ein Mobiltelefon oder ein kombiniertes Autoradio-Mobiltelefon, welches aus einem fest mit einem Fahrzeug verbundenen Hauptteil und einem von diesem abnehmbaren Bedienteil besteht, und beide Teile mechanische und elektrische Trennstellen aufweisen,
**dadurch gekennzeichnet,**
daß der Chipkartenhalter auf der dem Hauptteil des Gerätes zugewandten Seite des abnehmbaren Bedienteils oder am Hauptteil des Gerätes angeordnet ist, daß Kontaktstellen am Hauptteil oder dem abnehmbaren Bedienteil derart angeordnet sind, daß die Chipkarte bei aufgesetztem Bedienteil vom Hauptteil des Gerätes und vom aufgesetzten Bedienteil verdeckt ist.

2. Chipkartenhalter nach Anspruch 1,
**dadurch gekennzeichnet,**
daß die in das abnehmbare Bedienteil eingelegte Chipkarte mit diesem elektrisch kontaktiert ist und die weitere Kontaktverbindung zum Hauptteil des Gerätes über die Kontakte des abnehmbaren Bedienteils erfolgt.

3. Chipkartenhalter nach Anspruch 1,
**dadurch gekennzeichnet,**
daß die in das abnehmbare Bedienteil eingelegte Chipkarte direkt mit dem Hauptteil des Gerätes elektrisch kontaktiert ist.

4. Chipkartenhalter nach Anspruch 1 und 2,
**dadurch gekennzeichnet,**
daß das abnehmbare Bedienteil einen die Chipkarten-Information auslesenden Mikroprozessor aufweist.

## Claims

1. Chip card holder for inserting and fixing an SIM card in a mobile telephone or a combined car radio/mobile telephone that comprises a main section permanently connected to a vehicle and an operating section removable from the latter, both sections having mechanical and electrical separating points, characterized in that the chip card holder is disposed on that side of the removable operating section adjacent to the main section of the appliance or on the main section of the appliance and in that contact points are disposed on the main section or the removable operating section in such a way that, with the operating section mounted, the chip card is concealed by the main section of the appliance and by the mounted operating section.

2. Chip card holder according to Claim 1, characterized in that the chip card inserted in the removable operating section is electrically connected to the latter and the further contact connection to the main section of the appliance takes place via the contacts of the removable operating section.

3. Chip card holder according to Claim 1, characterized in that the chip card inserted in the removable operating section is electrically connected directly to the main section of the appliance.

4. Chip card holder according to Claims 1 and 2, characterized in that the removable operating section has a microprocessor that reads out the chip card information.

## Revendications

1. Support de carte à puce pour l'insertion et la fixation d'une carte SIM dans un téléphone mobile ou un ensemble combiné autoradio-téléphone mobile, qui est constitué par une partie principale reliée de façon fixe à un véhicule et par une partie de commande pouvant être retirée de cette partie principale, les deux parties possédant des points de séparation mécanique et électrique,
caractérisé en ce
que le support de carte à puce est disposé sur le côté, tourné vers la partie principale de l'appareil, de la partie de commande amovible ou sur la partie principale de l'appareil, et que les points de contact sur la partie principale ou sur la partie de commande amovible sont disposés de telle sorte que lorsque la partie de commande est en place, la carte à puce est masquée par la partie principale de l'appareil et par la partie de commande mise en place.

2. Support de carte à puce selon la revendication 1, caractérisé en ce
que la carte à puce insérée dans la partie de commande amovible est placée en contact électrique avec cette partie de commande et que l'autre liaison de contact avec la partie principale de l'appareil s'effectue par l'intermédiaire des contacts de la partie de commande amovible.

3. Support de carte à puce selon la revendication 1, caractérisé en ce
que la carte à puce insérée dans la partie de commande amovible est directement en contact électrique avec la partie principale de l'appareil.

4. Support de carte à puce selon les revendications 1 et 2, caractérisé en ce
que la partie de commande amovible possède un microprocesseur qui lit les informations de la carte à puce.
